**Europäisches Patentamt**

(19) **European Patent Office**

**Office européen des brevets**

(11) Numéro de publication: **0 028 976**
**B1**

(12) **FASCICULE DE BREVET EUROPEEN**

(45) Date de publication du fascicule du brevet:
**11.03.87**

(51) Int. Cl.⁴: **G 01 K 7/02**, B 23 K 20/00,
G 01 T 3/00

(21) Numéro de dépôt: **80401582.4**

(22) Date de dépôt: **05.11.80**

(54) **Procédé de réalisation d'une jonction entre deux fils métalliques de dimension très réduite.**

(30) Priorité: **07.11.79 FR 7927454**

(43) Date de publication de la demande:
**20.05.81 Bulletin 81/20**

(45) Mention de la délivrance du brevet:
**11.03.87 Bulletin 87/11**

(84) Etats contractants désignés:
**BE DE GB IT NL SE**

(56) Documents cités:
**FR - A - 974 021**
**LU - A - 67 219**
**US - A - 3 703 032**

**ADVANCES IN INSTRUMENTATION-ISA 1978, Annual Conference, vol. 33, 1ère partie, US, TEH PO WANG et al.: "Nicrosil-Nisil thermocouples in production furnaces", pages 235-254**

Le dossier contient des informations techniques présentées postérieurement au dépôt de la demande et ne figurant pas dans le présent fascicule.

(73) Titulaire: **COMMISSARIAT A L'ENERGIE ATOMIQUE Etablissement de Caractère Scientifique Technique et Industriel, B.P. 510, F-75752 Paris Cedex 15 (FR)**

(72) Inventeur: **Lacoste, Jean-André, 18, rue Saint Severin, F-75005 Paris (FR)**
Inventeur: **Leveque, Jean-Pierre, 2, rue Raoul Dautry, F-91190 Gif-sur-Yvette (FR)**
Inventeur: **Schley, Robert, 10bis, Allée du Rond-Point, F-94310 Orly (FR)**

(74) Mandataire: **Mongrédien, André et al, c/o BREVATOME 25, rue de Ponthieu, F-75008 Paris (FR)**

## Description

La présente invention se rapporte à la réalisation d'une jonction entre deux fils métalliques de dimension très réduite pour obtenir des dispositifs de mesure à partir de cette jonction.

De façon plus précise, la présente invention veut obtenir une jonction entre un fil d'un premier métal et un fil d'un deuxième métal correspondant à une longueur de jonction entre ces deux fils très réduite, par exemple, inférieure à 10 microns.

On sait que dans les réacteurs nucléaires, il est nécessaire de mesurer dans le cœur du réacteur la distribution du flux de neutrons thermiques selon l'axe vertical du cœur du réacteur. Cela est vrai entre autres pour les réacteurs du type à eau sous pression. La méthode consiste à analyser cette répartition du flux à partir de dispositifs appelés habituellement gamma thermomètres. En fait, on analyse l'échauffement gamma produit par le flux neutronique. Cette analyse est effectuée à partir de l'évaluation de la conductibilité thermique dans une barre d'acier inoxydable au moyen de thermocouples différentiels répartis tout au long de cette barre qui occupe sensiblement la totalité de la hauteur du cœur du réacteur. Il est nécessaire que ces barres aient un diamètre réduit et en conséquence, il est donc a fortiori nécessaire que ces thermocouples différentiels aient également un diamètre très réduit. Plus précisément, il est très souhaitable que le diamètre extérieur du thermocouple, y compris ses éléments d'isolation électrique soit de l'ordre de 1 à 0,5 mm.

On sait de plus que dans ces mêmes réacteurs, il est important de faire des mesures de flux neutronique.

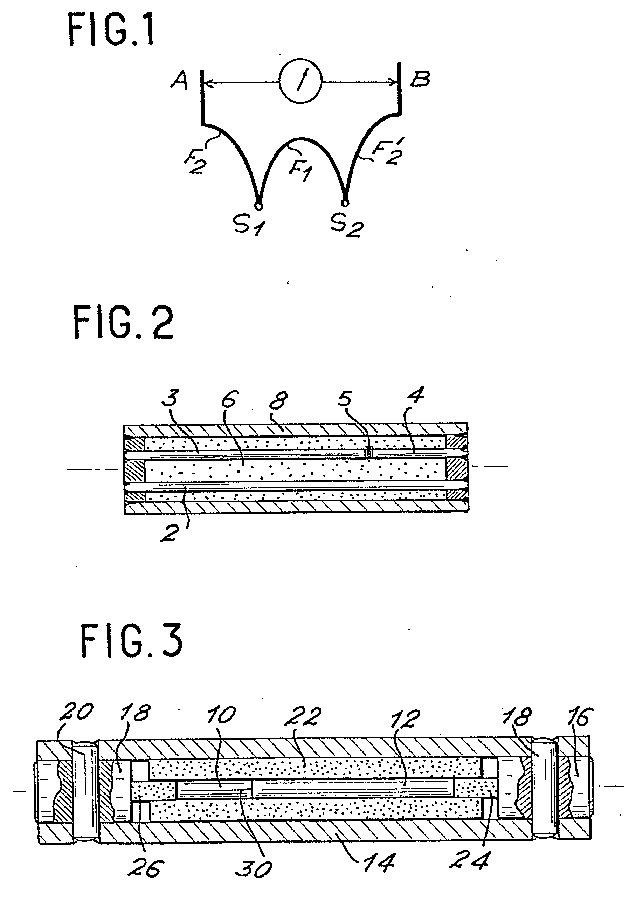

Sur la figure 1 annexée, on a représenté de façon schématique un thermocouple différentiel. Ce thermocouple est constitué en général par deux soudures $S_1$ et $S_2$ entre un fil conducteur $F_1$ réalisé en alumel et deux fils conducteurs $F_2$ et $F_2'$ réalisés en chromel. Si les deux soudures $S_1$ et $S_2$ sont placées dans des milieux correspondant à des températures différentes $\theta_1$ et $\theta_2$, des forces électromotrices sont engendrées au niveau de ces deux soudures. On les appelle $e_1$ et $e_2$. Grâce à ce thermocouple différentiel, on comprend qu'aux bornes A et B du dispositif, on puisse mesurer la force électromotrice $e = e_1 - e_2$ qui correspond donc à la différence de température $\theta_1 - \theta_2$ associée aux deux soudures $S_1$ et $S_2$.

On connaît (LU-A-67 219) un procédé de réalisation par soudage d'une jonction de deux fils entrant dans la réalisation d'un thermocouple. Les fils sont soudés, notamment par diffusion, de façon que la jonction soit localisée. Ensuite, le diamètre est réduit par un procédé tel que le martelage ou l'étirage.

Si le principe des thermocouples différentiels est bien connu et leur réalisation en général également bien connue, il s'avère beaucoup plus délicat de réaliser des thermocouples différentiels dont le diamètre est compatible avec les exigences requises pour loger ces thermocouples dans une barre d'acier inoxydable pour les mesures d'échauffement dû au rayonnement $\gamma$ dans le cœur d'un réacteur nucléaire.

En effet, pour obtenir une mesure précise de l'échauffement $\gamma$, il est absolument nécessaire que la soudure entre le fil en chromel et le fil en alumel ou les soudures entre ces deux fils ne présente qu'une longueur extrêmement réduite pour assurer une très bonne localisation de la mesure effectuée par ce dispositif.

Plus précisément, avec des fils ayant un diamètre initial de 1,5 mm, si l'on part d'une soudure de l'ébauche initiale de 0,5 mm de longueur (ce qui correspond déjà à une soudure d'une qualité tout à fait satisfaisante) on obtient un allongement de la soudure très important lors du tréfilage pour obtenir la cote finale désirée.

Plus précisément, si l'on veut obtenir un thermocouple ayant un diamètre extérieur de 0,5 mm, la soudure 5 dans son état final a une longueur de 140 mm. Si l'on se contente d'un diamètre extérieur de 1 mm, la soudure a encore une longueur de 35 mm. Or, de telles longueurs de soudure sont incompatibles avec une mesure précise de l'échauffement $\gamma$ du fait de l'imprécision de la localisation de la soudure assurant la mesure.

Or, les procédés connus ne permettent pas la réalisation d'une jonction présentant une longueur très réduite qui, après réduction de diamètre, donnera une zone de liaison encore très localisée.

On connaît également (US-A-3 703 032) un procédé de jonction par diffusion entre deux tubes usinés de manière à s'emboîter l'un dans l'autre. Un manchon fait dans un matériau ayant un faible coefficient de dilatation thermique est positionné sur la jonction. Le manchon, qui présente une forme extérieure conique, est lui-même inséré dans un autre manchon. Lorsque l'ensemble est chauffé, les faces du joint sont appliquées l'une contre l'autre par la pression due à l'expansion thermique du tube.

Toutefois, ce procédé ne s'applique pas à la réalisation d'une jonction de longueur très courte étant donné que les deux tubes sont emboîtés l'un dans l'autre.

On connaît également (DE-A-2 339 004 et US-A-1 376 848) des dispositifs de mesure du flux neutronique utilisés dans le cœur d'un réacteur de puissance.

Un dispositif de mesure de flux neutronique connu consiste en un fil actif en platine qui se comporte comme un collecteur $\beta$. Ce fil de platine est raccordé, d'une part par une soudure à un fil conducteur, par exemple en acier inoxydable, et d'autre part, à la gaine conductrice. Dans ce cas encore, il est important d'obtenir entre le fil de platine et le fil d'acier inoxydable une liaison aussi courte que possible. En effet, dans la zone de liaison on a un mélange de platine et d'acier inoxydable. La présence de l'acier inoxydable allié au platine modifie substantiellement les propriétés de collection $\beta$ de ce deuxième corps. La mesure de flux neutronique est donc également perturbée.

La présente invention a précisément pour but de réaliser une soudure entre un premier fil métallique et un deuxième fil métallique qui permet d'obtenir une longueur de soudure avant tréfilage telle qu'après cette opération, la longueur de soudure soit très réduite et par exemple inférieure à 2 mm. On comprend qu'à partir d'une telle soudure entre un fil d'alumel et un fil de chromel par exemple, il est alors aisé de réaliser un thermocouple différentiel présentant un diamètre réduit, ou avec du platine et de l'acier inoxydable un capteur de flux neutronique.

Le procédé consiste à réaliser un empilement par mise bout à bout du premier fil métallique et du deuxième fil métallique et à placer cet empilement en l'immobilisant dans un tube réalisé par exemple en molybdène et fermé à ses deux extrémités par un bouchon réalisé avec le même matériau que le tube. En outre, un tube en alumine et des entretoises en alumine isolent l'empilement chromel-alumel du tube et de ses bouchons. Plus généralement, le tube est réalisé en matériau ayant un coefficient de dilatation thermique beaucoup plus faible que les deux fils métalliques. On porte l'ensemble à une température de l'ordre de 1100°C pendant un temps compris entre une demi-heure et 1 heure. Du fait de la différence des coefficients de dilatation thermique du chromel et de l'alumel vis-à-vis de celui du matériau constituant le tube, par exemple du molybdène, les pièces réalisées avec les deux métaux se trouvent soumises à une pression importante au cours du chauffage provoquant entre les extrémités des pièces en contact une soudure par diffusion.

L'invention concerne donc un procédé de réalisation d'une jonction par soudage par diffusion d'une première pièce métallique à une deuxième pièce métallique, dans lequel on place bout à bout la première et la seconde pièces métalliques de manière qu'elles présentent une section de contact; on place la section de contact dans un bloc réalisé en un matériau dont le coefficient de dilatation thermique est inférieur à celui des métaux constituant les deux pièces; on porte l'ensemble à une température telle qu'on obtienne un soudage des extrémités en contact des pièces sous l'effet de la différence des dilatations des pièces et du bloc. Ce procédé se caractérise en ce que: chacune desdites premières et seconde pièces est un fil; la section de contact desdits fils est une section droite; le bloc est un tube; on réalise un empilement du premier fil et du second fil; on interpose entre le tube et ledit empilement des entretoises en matériau céramique de telle façon que toute réaction métallurgique entre les fils et le tube soit évitée; on ferme le tube à ses deux extrémités par des bouchons de telle façon que l'extrémité libre de chaque fil soit immobilisée vis-à-vis des bouchons; de telle sorte que la longueur de la jonction soit inférieure à 10 microns, c'est-à-dire 10 μm.

L'invention permet de réaliser avec une telle jonction un dispositif de mesure dont le diamètre extérieur est très faible, par exemple inférieur à 1 mm ou de l'ordre de 1 mm. De préférence, ce dispositif est un thermocouple différentiel ou une sonde de flux neutronique.

Dans le cas des thermocouples, les deux fils peuvent être du chromel et de l'alumel, du Nicrosil et du Nisil (Nicrosil: Ni, 14,2% Cr, 1,4% Si et Nisil: Ni, 4,4% Si, 0,1% Mg), du platine et du platine rhodié. Dans le cas de la sonde de flux neutronique on utilise, de préférence du platine comme matériau actif et de l'acier inoxydable comme conducteur électrique.

De toute façon, l'invention sera mieux comprise à la lecture de la description qui suit de plusieurs exemples de mise en œuvre du procédé objet de l'invention. La description se réfère aux figures annexées sur lesquelles on a représenté:

– sur la figure 1, déjà décrite, un schéma simplifié d'un thermocouple différentiel utilisable pour la mesure du flux neutronique;

– sur la figure 2, une ébauche pour la réalisation d'un thermocouple différentiel présentant un diamètre extérieur réduit réalisé selon l'invention; et

– sur la figure 3 un montage pour la réalisation d'une soudure alumel-chromel selon l'invention permettant d'obtenir une longueur de jonction entre ces deux matériaux très réduite.

Pour obtenir un thermocouple différentiel présentant un diamètre extérieur de l'ordre de grandeur indiqué précédemment (0,5 à 1 mm), on part d'une ébauche représentée sur la figure 2. Cette ébauche est constituée par un fil de chromel 2 et d'autre part, par une portion de fil en chromel 3 soudée à une extrémité d'une portion de fil en alumel 4 par une soudure 5. Ces deux ensembles de fils ont un diamètre de l'ordre de 1,5 mm. Cet ensemble de deux fils est noyé dans un matériau isolant céramique constitué par exemple par de l'alumine ou de la magnésie pulvérulente, cet isolant portant la référence 6. Une gaine extérieure en acier inoxydable 8 entoure l'isolant céramique. Cette ébauche présente un diamètre extérieur de l'ordre de 13 mm. On applique à cette ébauche une opération de tréfilage qui permet de réduire le diamètre extérieur initial de 13 mm à un diamètre final de 1 ou de 0,5 mm. Le problème lié à cette opération est que, même si l'on effectue par des moyens connus avec une très grande précision, la soudure 5, du fait du tréfilage, cette soudure 5 est allongée de façon très importante.

En se référant à la figure 3 annexée, on va décrire les différentes étapes du procédé objet de l'invention appliqué à l'obtention d'une jonction entre un fil en alumel et un fil de chromel, cette jonction présentant une longueur très réduite.

Dans un premier temps, comme on le voit sur la figure 3, on réalise un empilement d'un fil en alumel 10 et d'un fil de chromel 12, les deux fils étant placés bout à bout. On loge cet empilement à l'intérieur d'une enceinte constituée par un tube extérieur 14 réalisé en molybdène. Cette enceinte est complétée par deux bouchons 16 et 18 réalisés également en molybdène qui sont fixés au tube par les goupilles 20 également réalisées en molybdène. Le tube 14 présente un alésage intérieur suffisant pour qu'on puisse interposer entre l'empilement des fils 10 et 12 et le tube lui-même un manchon interne 22 en alumine. En outre, la distance séparant les bouchons 16 et 18 est suffisante pour qu'on puisse interposer entre les extrémités respectivement des fils 10 et 12 des cylindres 24 et 26 formant entretoises réalisés également en alumine. Ces cylindres 24 et 26 prennent respectivement appui sur les bouchons 18 et 16 et sur les extrémités des fils 10 et 12.

Dans une deuxième étape, on soumet le montage ainsi réalisé à un chauffage à une température de l'ordre de 1100 °C pendant une durée comprise entre une demi-heure et 1 heure. Sous l'effet de ce chauffage, on obtient une jonction par diffusion entre le fil en alumel 10 et le fil 12 en chromel au niveau de leur interface de contact 30. Ce résultat est obtenu par le processus suivant. L'alumel et le chromel d'une part et le molybdène ont des coefficients de dilatation thermique très différents. Plus précisément, le coefficient de dilatation thermique du chromel et de l'alumel est de deux à trois fois supérieur à celui du molybdène. Lors du chauffage à la température indiquée et du fait que les fils 10 et 12 sont bloqués par les bouchons 24 et 26, il se développe au niveau de l'interface 30 une pression considérable qui assure entre ces matériaux une soudure par diffusion.

L'épaisseur de la soudure ainsi obtenue est de l'ordre du micron. Même si l'on admet que cette soudure présente en fait une longueur de l'ordre de 5 microns, on obtiendrait, après transformation des ébauches par tréfilage pour réduire le diamètre extérieur aux dimensions indiquées précédemment, des longueurs des soudures suivantes. Dans le cas d'un thermocouple différentiel complet présentant un diamètre extérieur de 1 mm, la longueur de soudure est de 0,35 mm. Pour obtenir un thermocouple différentiel dont le diamètre extérieur est de 0,5 mm, la longueur de soudure est de 1,4 mm.

Il résulte des considérations précédentes que la longueur de soudure entre le chromel et l'alumel obtenue par la mise en œuvre du procédé selon l'invention est sans commune mesure avec les longueurs de soudure obtenues par les procédés connus. Plus précisément, on peut indiquer qu'il existe un facteur 100 entre la longueur de soudure obtenue par les procédés classiques et la longueur de soudure obtenue par le procédé selon l'invention.

Lorsque l'on a obtenu la soudure chromel-alumel dont la longueur a été indiquée précédemment, on comprend qu'il est alors très possible de replacer les deux soudures dans un dispositif tel que celui qui est représenté sur la figure 2, avant d'appliquer l'opération de tréfilage en vue d'obtenir le thermocouple différentiel.

On comprend aisément que, grâce à la longueur très réduite des jonctions entre les matériaux conducteurs de natures différentes, on obtient un thermocouple différentiel permettant d'obtenir des mesures très précises de l'échauffement γ dans le cœur du réacteur nucléaire.

Les mêmes étapes opératoires seraient mises en œuvre pour réaliser un thermocouple platine-platine rhodié ou un thermocouple Nicrosil-Nisil.

Plus précisément, on utiliserait également du molybdène pour réaliser l'enceinte 14 et on mettrait en œuvre des températures du même ordre.

Pour la réalisation de la sonde de flux neutronique, la liaison platine-acier inoxydable est réalisée par le même procédé. Pour obtenir la sonde complète, la seule différence réside dans le fait qu'il n'y a qu'une seule soudure.

**Revendications**

1. Procédé de réalisation d'une jonction par soudage par diffusion d'une première pièce métallique (10) à une deuxième pièce métallique (12), dans lequel on place bout à bout la première pièce (10) et la seconde pièce métallique (12) de manière qu'elles présentent une section de contact (30); on place la section de contact dans un bloc (14) réalisé en un matériau dont le coefficient de dilatation thermique est inférieur à celui des métaux constituant les deux pièces (10), (12); on porte l'ensemble à une température telle qu'on obtienne un soudage des extrémités en contact des pièces (10), (12) sous l'effet de la différence des dilatations des pièces et du bloc (14), caractérisé en ce que: chacune desdites première et seconde pièces (10), (12) est un fil; la section de contact desdits fils (10), (12) est une section droite; le bloc est un tube (14); on réalise un empilement du premier fil (10) et du second fil (12); on interpose entre le tube (14) et ledit empilement des entretoises (22, 24, 26) en matériau céramique de telle façon que toute réaction métallurgique entre les fils (10), (12) et le tube (14) soit évitée; on ferme le tube (14) à ses deux extrémités par des bouchons (16), (18) de telle façon que l'extrémité libre de chaque fil soit immobilisée vis-à-vis des bouchons (16), (18); de telle sorte que la longueur de la jonction soit inférieure à 10 microns, c'est-à-dire 10 μm.

2. Procédé selon la revendication, 1 caractérisé en ce que ledit tube (14) est réalisé en molybdène et en ce que ladite température est de l'ordre de 1100 °C.

3. Procédé selon la revendication 2, caractérisé en ce que ladite température est appliquée pendant un temps compris entre une demi-heure et une heure.

4. Procédé selon la revendication 1, destiné à la réalisation d'un thermocouple différentiel, caractérisé en ce que la soudure entre l'extrémité du premier fil (10) et l'extrémité du deuxième fil (12), obtenue par ladite jonction est utilisée en tant qu'ébauche du thermocouple et en ce que l'on dispose parallèlement au fil muni de la soudure un deuxième fil (12), en ce que l'on noie le fil muni de la soudure (10) et le deuxième fil (12) dans un matériau isolant (22) entouré d'une gaine, et en ce que l'on soumet ladite ébauche à une opération d'élongation réalisée par tréfilage pour lui donner un diamètre extérieur final voulu.

5. Procédé selon l'une quelconque des revendications 1 à 4, caractérisé en ce que ledit premier fil (10) est en platine et ledit deuxième fil (12) en platine rhodié.

6. Procédé selon l'une quelconque des revendications 1 à 4, caractérisé en ce que ledit premier fil (10) est en Nicrosil et le deuxième fil (12) en Nisil.

7. Procédé selon l'une quelconque des revendications 1 à 4, caractérisé en ce que ledit premier fil (10) est en platine et ledit deuxième fil (12) en acier inoxydable.

8. Procédé selon l'une quelconque des revendications 1 à 4, caractérisé en ce que ledit premier fil (10) est en alumel et le deuxième fil (12) en chromel.

## Claims

1. Process for producing a junction by diffusion-welding a first metal component (10) to a second metal component (12), in which the first component (10) and the second metal component (12) are placed end to end so that they have a contact interface (30); the contact interface is placed in a block (14) made of a material whose thermal expansion coefficient is lower than that of the metals forming the two components (10, (12); the whole is heated to a temperature such that welding of the ends in contact of the components (10), (12) is produced under the effect of the difference in the expansions of the components and of the block (14), characterized in that: each of the said first and second components (10), (12) is a wire; the contact interface of the said wires (10), (12) is a perpendicular cross-section; the block is a tube (14); a stack of the first wire (10) and of the second wire (12) is made; spacers (22, 24, 26) made of ceramic material are inserted between the tube (14) and the said stack so that any metallurgical reaction between the wires (10), (12) and the tube (14) is avoided; the tube (14) is closed at both its ends by means of plugs (16), (18) so that the free end of each wire is immobilized relative to the plugs (16), (18); so that the length of the junction is less than 10 microns, that is to say 10 µm.

2. Process according to Claim 1, characterized in that the said tube (14) is made of molybdenum and in that the said temperature is of the order of 1,100°C.

3. Process according to Claim 2, characterized in that the said temperature is applied for a time of between half an hour and one hour.

4. Process according to Claim 1, intended for the production of a differential thermocouple, characterized in that the weld between the end of the first wire (10) and the end of the second wire (12), produced by the said junction is used as a rough pattern of the thermocouple and in that a second wire (12) is arranged parallel to the wire provided with the weld, in that the wire provided with the weld (10) and the second wire (12) are embedded in an insulating material (22) surrounded by a sheath, and in that the said rough pattern is subjected to an elongation operation performed by wiredrawing to give it a required final external diameter.

5. Process according to any one of Claims 1 to 4, characterized in that the said first wire (10) is made of platinum and the said second wire (12) of platinum containing rhodium.

6. Process according to any one of Claims 1 to 4, characterized in that the said first wire (10) is made of Nicrosil and the second wire (12) of Nisil.

7. Process according to any one of Claims 1 to 4, characterized in that the said first wire (10) is made of platinum and the said second wire (12) of stainless steel.

8. Process according to any one of Claims 1 to 4, characterized in that the said first wire (10) is made of alumel and the second wire (12) of chromel.

## Patentansprüche

1. Verfahren zur Herstellung einer Verbindung zwischen einem ersten metallischen Werkstück (10) und einem zweiten metallischen Werkstück (12), bei dem man das erste Werkstück (10) und das zweite metallische Werkstück (12) stumpf aneinandersetzt, so dass sie einen Berührungsquerschnitt (30) bilden; man den Berührungsquerschnitt in einen Block (14) aus einem Material einsetzt, dessen Wärmeausdehnungskoeffizient geringer als der der Metalle ist, die die zwei Werkstücke (10, 12) bilden; man die Anordnung auf eine Temperatur bringt, dass man eine Verschweissung der sich berührenden Enden der Werkstücke (10, 12) unter der Wirkung der Differenz der Wärmedehnungen der Werkstücke und des Blocks (14) erhält, dadurch gekennzeichnet, dass jedes der ersten und zweiten Werkstücke (10, 12) ein Draht ist; der Berührungsquerschnitt der Drähte (10, 12) ein gerader Querschnitt ist; der Block ein Rohr (14) ist, man den ersten Draht (10) und den zweiten Draht (12) aneinandersetzt; man zwischen das Rohr (14) und die Aneinandersetzung Verstrebungen (22, 24, 26) aus einem keramischen Material einfügt, so dass sämtliche metallurgische Reaktion zwischen den Drähten (10, 12) und dem Rohr (14) vermieden wird; man das Rohr (14) an seinen zwei Enden durch Stopfen (16, 18) verschliesst, so dass das freie Ende eines jeden Drahtes gegenüber den Stopfen (16, 18) festgelegt ist; so dass die Länge der Verbindung geringer als 10 Mikron, d.h. 10 µm ist.

2. Verfahren nach Anspruch 1, dadurch gekennzeichnet, dass das genannte Rohr (14) aus Molybdän besteht und dass die genannte Temperatur in der Grössenordnung von 1100°C liegt.

3. Verfahren nach Anspruch 2, dadurch gekennzeichnet, dass die genannte Temperatur während einer Zeit herrscht, die zwischen einer halben und einer ganzen Stunde liegt.

4. Verfahren nach Anspruch 1, bestimmt für die Herstellung eines Differenzthermoelements, dadurch gekennzeichnet, dass die Verschweissung zwischen dem Ende des ersten Drahtes (10) und dem Ende des zweiten Drahtes (12), die man durch die genannte Verbindung erhält, als Rohling eines Thermoelements verwendet wird, und dass man parallel zu dem mit dem Schweissmittel versehenen Draht einen zweiten Draht (12) anordnet und dass man den mit dem Schweissmittel versehenen Draht (10) und den zweiten Draht in ein isolierendes Material (22) einbettet, das von einer Umhüllung umgeben ist, und dass man den genannten Rohling einer Ausdehnungsbehandlung unterwirft, die durch Ziehen ausgeführt wird, um ihm einen gewünschten Enddurchmesser zu verleihen.

5. Verfahren nach einem der Ansprüche 1 bis 4, dadurch gekennzeichnet, dass der erste Draht (10) aus Platin und der zweite Draht (12) aus rhodiumhaltigem Platin besteht.

6. Verfahren nach einem der Ansprüche 1 bis 4, dadurch gekennzeichnet, dass der erste Draht (10) aus Nicrosil und der zweite Draht (12) aus Nisil besteht.

7. Verfahren nach einem der Ansprüche 1 bis 4, dadurch gekennzeichnet, dass der erste Draht (10) aus Platin und der zweite Draht (12) aus Edelstahl besteht.

8. Verfahren nach einem der Ansprüche 1 bis 4, dadurch gekennzeichnet, dass der erste Draht (10) aus Alumel und der zweite Draht (12) aus Chromel besteht.

# FIG.1

# FIG.2

# FIG.3